# EUROPEAN PATENT APPLICATION

(11) **EP 0 723 939 A1**
(43) Date of publication of application: **31.07.1996**
(21) Application number: 94929639.6
(22) Date of filing: 11.10.1994
(51) Int. Cl.: C02F 3/00

(54) **EXCRETA DEODORIZATION METHOD AND APPARATUS**

(30) Priority: 16.10.1993 JP 281815/93; 17.09.1994 JP 248551/94
(71) Applicant: Yamada, Fusao, Nishinomiya-city, Hyogo 651-14 (JP)
(72) Inventor: Yamada, Fusao, Nishinomiya-city, Hyogo 651-14 (JP)
(74) Representative: TER MEER - MÜLLER - STEINMEISTER & PARTNER
(86) International application number: JP9401699
(87) International publication number: WO9511200

(57) **Abstract**

To provide excreta deodorization method and apparatus which prevent malodor emission from the treatment tanks, do not generate slurry, can dispense with the dipping-up of excreta, and therefore can dispense with the discharge of the treated excreta as sewage. Excreta deodorization method and apparatus whereby excreta flowing from a toilet are completely decomposed by aerobic bacteria in a pretreatment tank and a main treatment tank and discharged in the form of carbon dioxide and water vapor. Excreta (3) flowing into a pretreatment tank (1) from a toilet (A) are preliminarily decomposed by aerobic bacteria by blowing air into the tank (1) and the decomposed excreta overflow into a main treatment tank (12), where the excreta (14) are completely decomposed into carbon dioxide while keeping the bacteria at the optimum working temperature by using a heater (22) and blowing air into the tank (12) from a blower (15) through a tubular foot (18). The generated carbon dioxide is thus deodorized and discharged through a ventilator (27). Also malodorous ammonia is deodorized, because it is decomposed into hydrogen and nitrogen gases by the action of the aerobic bacteria.

## Description

### TECHNICAL FIELD

The present invention relates to a method of treatment of excreta discharged from toilets for obviating the need their dipping-up and also for deodorizing them and apparatuses adapted therefor.

### PRIOR ART

The excreta discharged from home toilets in areas where sewage treatment facilities are not provided are accumulated, to be dipped up. The excreta in this state emit malodor. As a toilet is modified into flushing system, an excreta tank of large capacity is required for accumulating large amount of flushing water and excreta, and with increasing dipping-up rates, adoption of flushing system becomes more difficult. Further, even if simplified purification system was individually introduced, their perfect treatment was impossible and accordingly, the treated liquid was not allowed to let out as sewage.
Moreover, even if such treated liquid was removed, the dirt turned sludge which had precipitated in the tank needed to be cleaned off. Thus the conventional facilities involved many problems of environmental hygiene and labor. In this situatin, the applicant already filed a utility model application for an evaporator for deodorized toilets under Utility Model Application No. Sho 63-46667. This invention relates to an apparatus not only for deodorizing excreta accumulated in excreta tank by liquifying them through decomposition with bacteria and converting them into carbon dioxide, to be discharged, togerther with steam, but also for obviating the need for dipping-up. It is now desired to develop methods and apparatuses for further improving the effects of deodorization and dispensation of dipping-up.

It is therefore the theme of this invention to take on the task to provide an excreta treatment method and apparatuses adapted therefor for home toilets for preventing emission of malodor from excreta tanks, obviating the need for dipping-up, discharging the treated liquid as sewage, and periodicaly taking out the dirt turned sludge which has precipitated in the tanks.

Further object is to modify already installed excreta tanks for turning them into ones which assure deodorization and obviation of the need for dipping-up with treatment apparatuses therefor.

### DISCLOSURE OF THE INVENTION

Intended for solving the problems hereinabove described, the present invention resides in the treatment method of excreta flowing in from a toilet for completely decomposing them in pretreatment and main treatment tanks by the aid of aerobic bacteria.

One means devised for this purpose, as claimed in Claim 1, comprises accumulating the dirt including excreta and flushing water in the pretreatment tank, preliminarily decomosing the dirt with oxygen supplied to the aerobic bacteria therein for invigoration of their activity, while stirring the tank content, by blowing air into said accumulated dirt, and then letting the predecomposed dirt overflow through the side wall of the pretreatment tank, while keeping it at a predetermined level, to be transferred into the main treatment tank.

Then while heating the transferred accumulated dirt to the activation temperature of bacteria, air is blown out into the dirt, to stir it, and also air is blown out against the dirt surface, thereby decomposing it with the air supplied to the aerobic bacteria there in. In that way the dirt is not only liquified, but is converted into carbon dioxide, so that the carbon dioxide, hydrogen and nitrogen gases, together with steam, are exhausted from the main treatment tank. Thus this process provides a 2 tank excreta deodorization method.

The invention of Claim 2 resides in a 2 tank deodorization method according to Claim 1 which comprises preventing falling of dirt level by suspending the heating of the dirt upon detection of the dirt level falling to a position slightly higher than the level at which the stirring air is blown into the accumulated dirt in the main tank.

The invention of Claim 3 resides in a 2 tank deororization method according to Claim 1 or 2 which comprises preventing the dirt level from going up by issuing an alarm upon detection of the dirt level going up above a position slightly lower than the level at which the air is blown out against the dirt surface in the main treatment tank.

The invention of Claim 4 resides in a 2 tank deodorization aparatus consisting of a) an excreta pretreatment tank having an inlet for letting dirt of excreta and flushing water there into provided in the tank wall, an air feed piping arranged from a blower located outside the tank, a plurality of tubular legs, which are linked through flexible pipes to said air feed piping and provided with a plurrality of holes through which to blow out air into the dirt, installed in the tank, a vent duct for discharging carbon dioxide, hydrogen and nitrogen gases which have been generated from the dirt, projected from the tank wall, and b) a main excreta treatment tank having a dirt inlet, which is communicated to the dirt outlet of the pretreatment tank through a coupling pipe, provided in its tank wall, an air feed piping arranged from a blower located outside the tank, a plurality of tubular legs, which are linked to said air feed piping through fexible pipes and provided with air blow-out holes located in the dirt, placed in the tank, a vent duct, through which to blow out air against the dirt surface in the tank, hung from above, a heater for heating the dirt installed on the tank bottom, a thermostat with a temperature detector located near said heater directly thereabove outfitted outside the tank, and a vent duct for exhausting the carbon dioxide, hydrogen and nitrogen gases, together with steam, projected therefrom.

The invention of Claim 5 resides in a tank deodorization apparatus according to Claim 4 having a lower level detector for detecting the dirt level arranged at a position slightly higher than the air blow-out holes of the tubular legs of the air feed piping placed in the dirt inside the main treatment tank, with a switch which disconnects power from the heater, acknowledging the actuation of said lower level detector, provided.

The invention of Claim 6 resides in the excreta deodorization apparatus according to Claim 4 or 5, having an upper level detector for detecting the dirt level arranged at a position slightly lower than the air blow-out duct through which to blow out air against the dirt surface in the main treatment tank, and an alarm buzzer and an alarm lamp, which acknowledge the actuation of said upper level detector, arranged outside the tank.

The invention of Claim 7 resides in the 2 tank deodorization apparatus according to Claim 4, 5 or 6, wherein the tublar legs provided with air blow-out holes located in the dirt inside the main treatment tank are replaced by a vertical air feed pipe and a U shape air blow-out pipe, which laterally branches out in U shape from the bottom of the air feed pipe, and which is provided with a plurality of air blow-out holes on the lower side thereof.

The invention of Claim 8 resides in the 2 tank excreta deodorization apparatus according to Claim 4, 5, 6 or 7 having a main treatment tank which is made up of 2 bodies of a treatment tank proper provided with a joint opening at its top center and a treatment tank upper cylinder mated to the joint opening at the top center of said treatment tank proper, the treatment tank proper being provided in its wall with a dirt inlet to which is connected a coupling pipe extending from the pretreatment tank, and a vent duct fitting opening for the vent duct through which to exhaust the carbon dioxide, hydrogen and nitrogen gases, together with steam, which have been generated from the dirt, provided on the upper wall shoulder of the treatment tank proper.

The invention of Claim 9 resides in the 2 tank excreta deodorization aparatus according to Claim 4, 5, 6, 7 or 8, wherein the tank wall of the main treatment tank is made of a hard resin laminate of a hard resin foam as its core sandwitched by two hard resin plates.

The invention of Claim 10 resides in the 2 tank excreta deodorization apparatus according to Claim 4, 5, 6, 7, 8 or 9, wherein the material of the wall of the main treatment tank is hard urethane resin.

The invent ion of Claim 11 resides in the 2 tank excreta deodorization apparatus of the means according to Claim 4, 5, 6, 7, 8, 9 or 10, wherein the outer wall of the tank wall of the main treatment tank is black in color, while its inner wall is clolored white.

In the following the action of this invention is described: In the excreta deodorization process of this invnetion, oxygen is supplied into the dirt, while vigorously stirring it by blowing air into the dirt including excreta and flushing water which have flowed into a pretreatment tank from a toilet. Then aerobic bacteria living in the dirt are very livelily propagated by the aid of oxygen thus supplied, causing the dirt to be extensibly decomposed into sewage, accompanied by its conversion into carbon dioxide and steam. The carbon dioxide and steam which have been produced by the decomposition are discharged through a vent duct. Besides, stinking ammonia is decomposed into hydrogen and nitrogen by the decomposing actions of stirring and aerobic bacteria, forestalling emission of malodor. The dirt treated in this way overflows through the side wall of the pretreatment tank, while holding its level constant, then flowing into the next stage main treatment tank. Holding the constant water level in the pretreatment tank is indispensable to achieve the state of maximal decomposition activity of the aerobic bacteria in the next stage main treatment tank.

In the main treatment tank, the dirt is heated to a temperature at which aerobic bacteria are active by means of a heater arranged in the dirt, thereby invigorating the decomposition activity of the aerobic bacteria, Further, oxygen is supplied to the aerobic bacteria in the dirt, while vigorously stirring the dirt by blowing out air thereinto. Since aerobic bacteria need extremely large amount of oxygen for making their activity, still more air is blown out against the dirt surface, thereby not only expelling the heavy carbon dioxide gas generated, but further invigorating the activity of the aerobic bacteria on the dirt surface by supplying oxygen thereto, to further accelerate the decomposition of dirt. As a result, the dirt is completely decomposed into sewage, yielding carbon dioxide at the same time, which is exhausted, together with steam. Since the dirt is adequately decomposed and ammonia is also deomposed into hydrogen and nitrogen by the decomposing actions of stirring in the presence of air and arobic bacteria, this exhaust gas is completely deodorized. The dirt in the main treatment tank is turned into sewage without forming sludge, to be further vapolized, thus with reduced weight. Accordingly, the treatment apparatus of this invention entirely obviates the need of not only otherwide necessary dipping-up but its discharge as sewage.

With the temperature detector of a thermostat for heater control located in proximity to and directly above a heater placed on the main treatment tank bottom, the temperature of the dirt is held by the heater at an optimal activation temperature of aerobic bacteria. As the amount of dirt in the treatment tank is decreased by the decomposition by the action of aerobic bacteria, the dirt surface finally falling down below the installed positions of the temperature detector and the heater, then the temperature detector and the heater are exposed. In this state, because the heater is not interferred by the dirt, the rising temperature brought about by the heater directly reaches the temperature detector, to be detected thereby. Then upon detecting the temperature just going to exceed the preset temperature of 30 °C which is the optimal activation temperature of the aerobic bacteria, the thermostat operates to disconnect power from the heater. Accordingly, overheating would not occur, even if the main treatment tank has been emptied, with the excreta decomposed by the activity of the aerobic bacteria, for assurance of safety and sparing unnecessary consumption of power.

The preset temperature of the main treatment tank may be set by means of a thermostat for controlling the heater to an arbitrary temperature, as appropriate, in accordance with the amount of dirt to be treated. For example, for a toilet utilized by 5 to 8 family members, it is set at 30 °C, and for one utilized by 4 or less members, at 24°C. In this way the balance may be just struck between the activity of the aerobic bacteria and the optimal temperature.

In anoather mode of application of this invention, a lower level detector is located at a position slightly above the air blow-out holes of the tubular legs of the air feed piping placed in the dirt inside the main treatment tank, to take the place of the aforementioned operation of the temperature detector and the thermstat. With this arrangement, as the amount of dirt in the main treatment tank is reduced by its decompostion by the action of aerobic bacteria, the lower level detector actuator operates to disconnect power from the heater through operation of a switch located outside the tank. Accordingly, also in this way, even if the main treatment tank is emptied, as the excreta have been decomposed by the activity of the aerobic bacteria, no overheating would take place for assuance of safety and sparing unnessary consumption of power.

Further, with an upper level detector for detecting the dirt level located at a position slightly lower than the level of the air blow-out duct for blowing out air against the dirt surface in the main treatment tank, as the dirt level has gone up due to insufficient activity of aerobic bacteria, this level up is quickly detected by the upper level detector, causing the upper level detector actuator to operate; as a result, an alarm buzzer and an alarm lamp located outside the tank are operated, to announce occurrence of a failure.

The means to vigorouly stir the dirt inside the main treatment tank by blowing air there into is formed of a tubular legs or a plurality of branched pipes. With each branched pipe provided with air blow-out holes on the lower end thereof, the air fed there to is allowed to be uniformly blown out into the dirt.

Furthermore, if a vertical air feed pipe reaching near the bottom of the main treatment tank and a U shape air blow-out pipe laterally branching out in U shape from the lower end of the air feed pipe and having a plurality of air blow-out holes on the lower side thereof are employed, in place of the aforementioned tubular legs, air blow-out sound is calmed and the structure of the air blow-out pipe is more simplified, resulting in reduced material, simplified fabrication and cut back on cost.

If the main treatment tank is composed of 2 bodies of the treatment tank proper and a treatment tank upper cylinder mated to the joint opening at the top center of said treatment tank proper, the 2 bodies may be joined together to form the main treatment tank when installing it. Before installing it, it may be separated into 2 bodies, to be transported or stored for facility in handling a large treatment tank. Further a treatment tank with a higher upper cylinder allows the treatment tank proper to be buried deep in the ground where seasonal temperature fluctuation is small, enabling temprature change of the treatment tank proper to be reduced and the activation temperature of aerobic bacteria to be kept constant.

The wall of the main treatment tank is a hard resin laminate formed by sandwitching a core of a hard resin porous foam with hard resin plates, so that the tank wall has a warm-keeping effect for the benefit of reduced power cost. As this hard resin, hard urethane resin is excellent.

In addition, as the outside of the wall formed of the hard resin laminate is colored black and the inside white, the main treatment tank can afford highly efficient absorption of outside heat.

In the apparatus of this invention, even if bacteria were mixded into the gases exhausted from the pretreatment and main treatment tanks, they would be suffocated and sterilized by the carbon dioxide in the exhaust gases rising in the vent duct; consequently, clean gases only are discharged from the vent duct for assurance of safety.

Furthermore, any conventional excreta tank which has already been installed may be readily adapted for the 2 tank deodorization method of this invention by turning it into a tank for pretreatment. Thus a pretreatment tank may be created by joining an air blow-out device composed of tubular legs, or branched pipes provided with air blow-out holes, through flexible pipes with an air feed piping arranged from a blower installed outside the tank, and providing an outlet for letting the dirt overflow therefrom through the side wall thereof. A coupling pipe is attached to this outlet and connected to the inlet of the aforementioned main treatment tank which is installed as the next stage. In this way, by applying the method of this invention, modification to the 2 tank deodorization apparatus of this invenion may be realily realized.

### BRIEF DESCRIPTION OF THE DRAWINGS

FIG. 1 is an explanatory diagram of a 2 tank teatment apparatus of this invention with its tank wall cut off;
FIG. 2 is an oblique view of an air blow-out device made up of tubular legs which are placed in a pretreatment tank;
FIG. 3 is an oblique view of an air blow-out device made up of tubular legs which are placed in a main treatment tank;
FIG. 4 is an oblique view of a U-shape air blow-out piping which is arranged in the main treatment tank;
FIG. 5 is a view showing arrangement of components inside another main treatment tank embodying the invention;
FIG. 6 is an oblique view of a heater installed in a main treatment tank;
FIG. 7 is a plan view of a treatment tank proper of the other main treatment tank embodying this invention;
FIG. 8 is a front view of the treatment tank proper of the other main treatment tank embodying this invention;
FIG. 9 is a side view of the treatment tank proper of the other main treatment tank embodying this invention;
FIG. 10 is a front view (a) and a plan view (b) of a treatment tank upper cylinder of the other main treatment tank embodying this invention; and
FIG. 11 is a schematic view showing the structure of the apparatus wall.

Referring to these figures, A denotes a toilet; B, a floor of the toilet; C, a downcomer; X, the height of a lower level detector from the tank bottom. Then 1 stands for a pretreatment tank; 2, a dirt inlet; 3, dirt; 4, a blower; 5, air feed piping; 6, flexible pipes; 7, tubular legs; 8, air blow-out holes; 9, a vent pipe; 10, an outlet; 11, a coupling pipe; 12, a main treatment tank; 13, an inlet; 14, dirt; 15, a blower; 16, an air feed piping; 17, flexible pipes; 18, tubular legs; 19, air blow-out holes; 20, an air blow-out duct; 21, a blower; 22, a heater; 23, a temperature detector; 24, a connection wire; 25, a thermostat; 26, a cover; 27, a vent duct; 28, an exhaust fan; 29, coils; 30, a main treatment tank; 31, a lower level detector; 32, an upper level detector; 34, an upper level detector actuator; 35, vertical air feed pipe; 36, a U-shape air blow-out pipe; 37, a main treatment tank proper; 38, a main treatment tank upper cylinder; 39, a joint opening; 40, protruded braces; 41 an inlet attached to a coupling pipe; 42, a vent duct fitting hole; 43, a joint female screw; 44, a joint male screw; 45, a flange; 46, an upper cylinder; 47, protruded braces; 48, an opening; 49, a tank wall laminate; 50, black hard urethane resin plate; 51, a white hard urethane resin plate; and 52, a hard urethane resin porous foam.

### THE MOST PREFERABLE MODE OF APPLICATION OF THE INVENTION

The method and the apparatuses for exercising it of this invention will be more clearly understood from the description taken of perferred embodiments thereof in reference to attached drawings as follows:

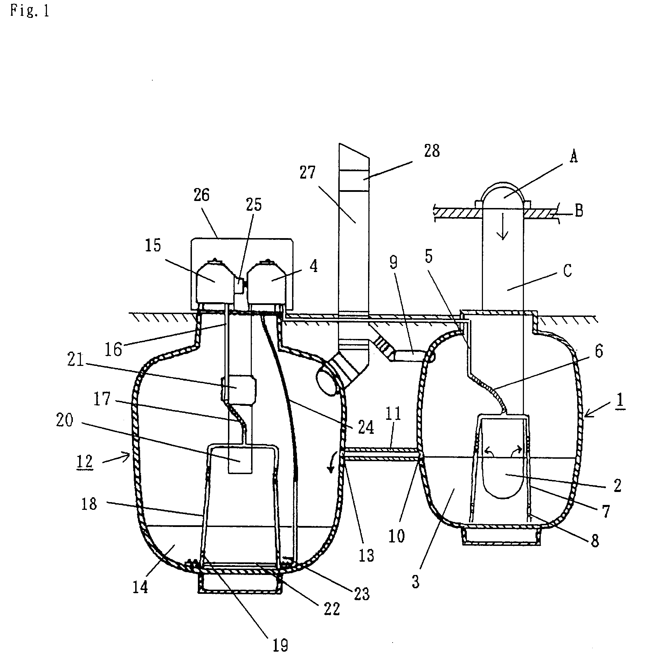

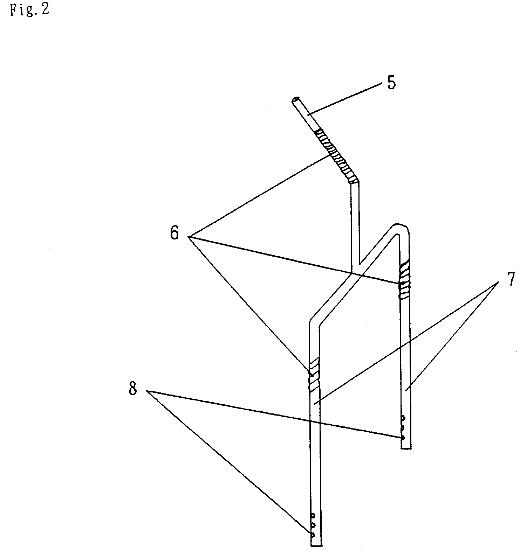

As shown in FIG. 1, the excreta discharged, together with flushing water, from a toilet A on a floor B go down through a downcomer C in the direction indicated by an arrow and pass a dirt inlet 2 opening into an excreta pretreatment tank 1 which is buried in the ground, normally with its top section removed, to be accumulated as dirt 3 in the pretreatment tank 1. Normally the pretreatment tank 1 is formed of plastic. An air feed piping 5 is arranged to the pretreatment tank 1 from a blower located on a main excreta treatment tank 12 placed adjacent thereto. As illustrated in FIG. 2, this air feed piping 5 is inserted into the pretreatment tank and linked through flexible pipes 6 made of stainless steel to a tubular leg section 7 branched into 2 legs at the central position in the tank. The tubular leg section 7 is stood erect in the dirt 3, with air blow-out holes 8 provided at the distal ends of the tubular legs immersed in the dirt 3. In this embodiment, the pretreatment tank 1 has from 65 to 70cm diameter and 100cm height, the blower should be one of about 20 to 30 watts, and the tubular leg 7 should be made of a highly corrosion resistant 8 to 10mm ⌀ plastic or stainless steel pipe or the like. A vent pipe 9 is projected from a shoulder of the pretreatment tank 1. Forcibly discharged through this vent pipe 9, together with steam, into the atmosphere by means of an exhaust fan 28 are the carbon dioxide generted from the dirt which has been decomposed by the activity of aerobic bacteria and the hydrogen and nitrogen from stinking ammonia which has been decomposed by dint of air agitation. Through the side wall of the pretreatment tank 1, there is provided an outlet 10, which is communicated by a coupling pipe 11 to a dirt inlet 13 opened into the side wall of the main treatment tank 12. The dirt 3 in the pretreatment tank 1 is decomposed by aerobic bacteria or pretreated to be sewage, which is accumulated until its level reaches to the outlet 10. Upon reaching the level of the outlet 10, the fully pretreated sewage overflows into the main treatment tank 12 through the coupling pipe 13.

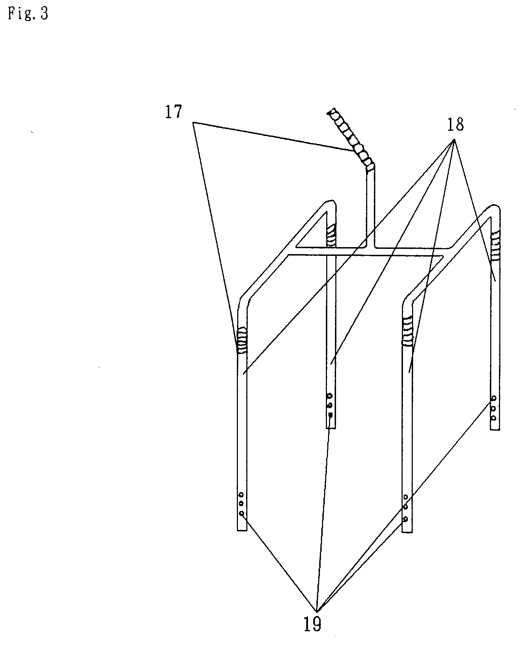

The main treatment tank 12 has its proper buried undergond, with its top section left on the groud. An air feed piping 16 is arranged from a blower 15 installed on the main treatment tank 12. This air feed piping 16 is inserted into the main treatment tank 12 and linked through flexible pipes made of stainless steel to a tubular leg section 18 having 4 branched legs, as shown in FIG. 3, at the central position of the tank. The tubular legs 18 are held erect in the dirt 14 and provided with air blow-out holes 19 at the distal end of each tubular leg 18 immersed in the dirt 14. In this embodiment, the main treatment tank 12 has from 75 to 80cm diameter and 135cm height and is equipped with a 50 to 60 watt blower 4. The tubular leg 18 should be made of an highly corrosion resistant material like an 8 to 10mm ⌀ plastic or stainles steel pipe. An air blow-out duct 20 is hung above the surface of the dirt 14 from the top of the main treatment tank 12. Inside the air blow-out duct 20, there is installled a blower 21, which feeds oxygen in the air to the surface of the dirt 14, supplementing oxygen to cover the short supply of oxygen which is blown out into the dirt from the tubular legs 18, thereby preventing the aerobic bacteria from extinction by the carbon dioxide which has been generated by decomposition of dirt and which is hovering in large quantity over the surface of the dirt 14. Such carbon dioxide is also quickly removed through a vent duct 27 projected from the shoulder of the main treatment tank 12, thereby preventing the aerobic bacteria from extinction. Accordingly, the vent duct 17 is provided with an exhauster 28 for forcible ventilation. Forcibly discharged, together with steam, through this vent duct 27 into the atmosphere by means of an exhauster are the carbon dioxide generated from the dirt which has been decomposed by the activity of aerobic bacteria and the hydrogen and nitrogen generated by decomposition of stinking ammonia by the aid of air agitation.

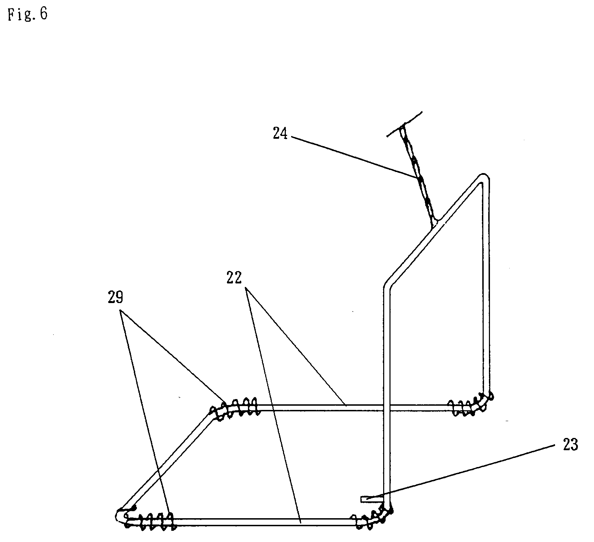

At the bottom of the main treatment tank 12, there is provided an enclosed heater 22, illustrated in FIG. 6, which holds the dirt 14 at the bacteria's optimal activation temperature for invigorating the activity of the aerobic bacteria in the dirt 14. In this embodiment, a 400 watt heater 22 is utilized. Besides, corrosion resistant coils 29 are wound about the outer sleeve of the heater at appropriate positions for prevention of its direct touching on the bottom of the main treatment tank 12. The heater 22 is temperature-controled by means of a thermostat 25 located outside the tank, to which is it connected by a connection w ire 24, to hold the temperature of bacteria at a constant level. The temperature detector 23 of the thermostat 25 is disposed directly above the heater 22 at the tank bottom at a distance therefrom. In this embodiment, it is placed about 7mm above the heater 22. This provides not only proper control of the temprature of dirt, but assures direct detection of the heat from the heater 22 by the temperature detector 23, if and when the dirt 14 decreases, leaving the heater 22 and the temperature detector 23 exposed apart from the dirt 14, thereupon actuating the thermostat 25, to disconnect power from the heater 22, thereby forestallling abnormal heating.

In another embodiment of this invention, the tubular leg section 18 branched into 4 legs in the main treatment tank is replaced by a tubular leg section 18 composed of a vertical air feed pipe 35 and a U shape air blow-out pipe 36 laterally extending from the bottom end of the air feed pipe. On the lower side of the U shape air blow-out pipe 36, there are provided a plurality of air blow-out holes 19 at equal intervals. In this embodiment, the thickness of the vertical air feed pipe 35 and the U shape air blow-out pipe 36 is 15mm in diameter, the width of the U-shape 28cm, the length of each of the 2 legs of the U shape 45cm, and each leg has seven 3mm ⌀ air blow-out holes 19 opened on its lower side at intervals of 5cm.

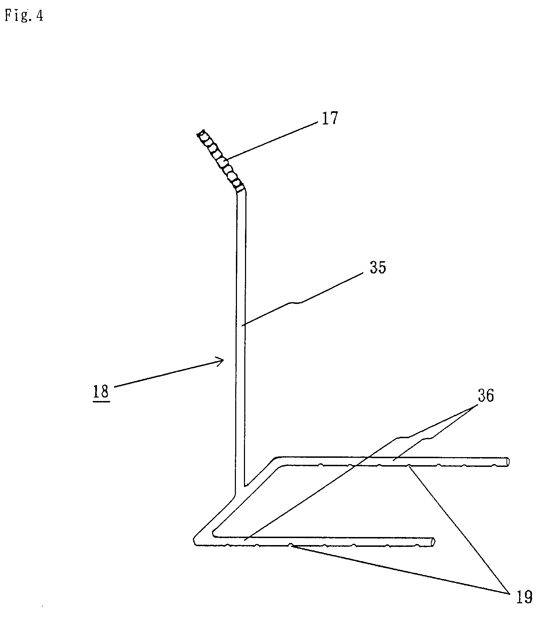

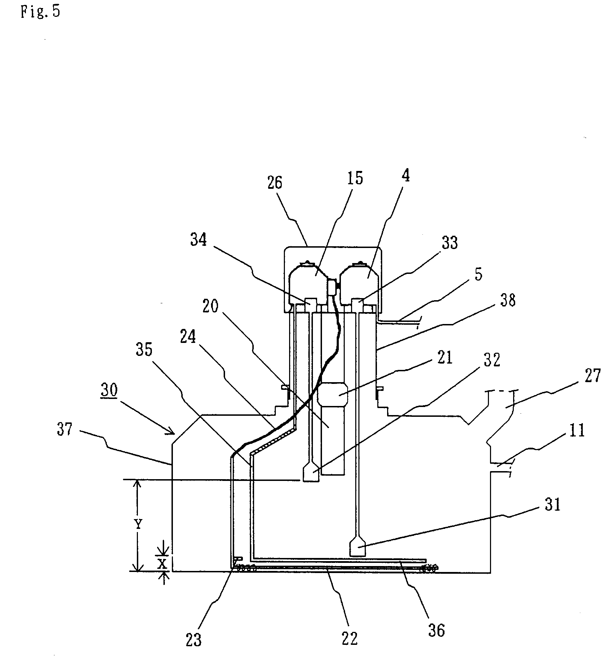

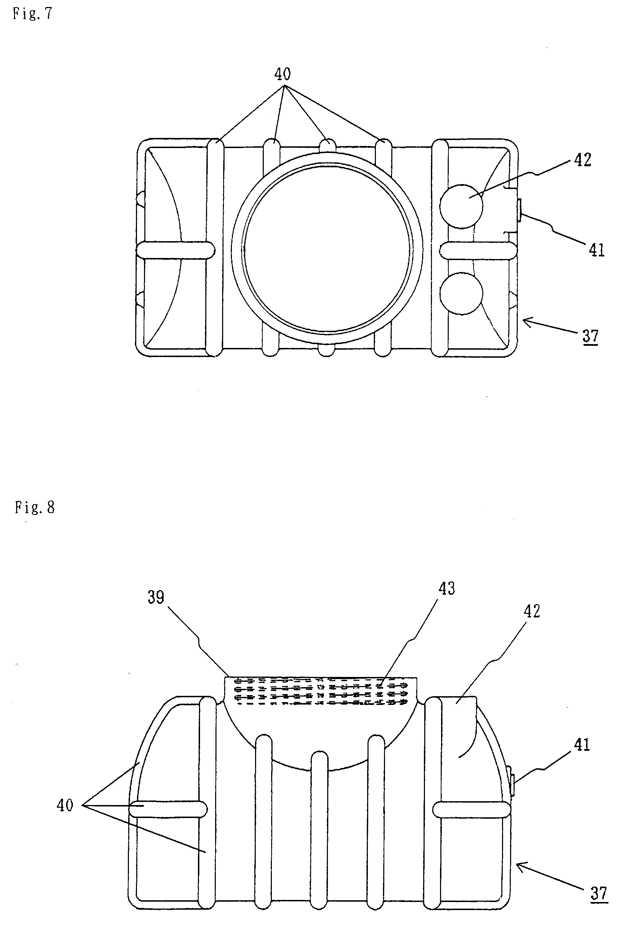

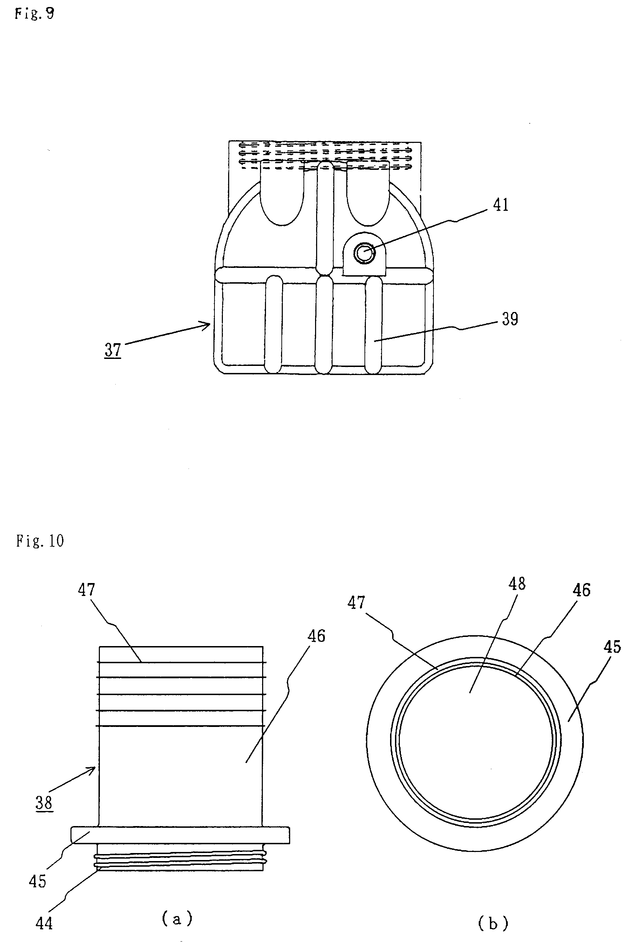

FIG. 5 Schematically shows how various components are arranged inside the main treatment tank 30 of another embodiment of this invention shown in FIGS. 7 through 10. Referring to this figure, in the side wall of the treatment tank proper 37, there is attached a coupling pipe 11 through which to let in the pretreated dirt coming from the pretreatment tank, not shown in this figure, and on the shoulder thereof, a vent duct 27 for releasing gases and ste am. To the central top of the treatment tank proper 37, a treatment tank upper cylinder 38 is contiguously joined; in the upper part of the treatment tank upper cylinder 38, blowers 4 and 15 are arranged, and from the blower 4, air is fed to the pretreatment tank through an air feed piping 5. From the blower 15, air is fed through the vertical air feed pipe 35 and the U shape air blow-out pipe 36 extending from the bottom of the air blow-out pipe, being the tubular leg section 18, as shown in FIG. 4. At the bottom of the treatment tank proper 37, there is arranged the heater shown in FIG. 6, similarly as inside the main treatment tank of FIG. 1. An air blow-out duct 20 provided with a blower 21 midway therein is held in place, similarly as in the main treatment tank of FIG. 1, extending from the treatment tank upper cylinder 38 to the central upper part of the treatment tank proper 37, through which to blow out air against the dirt surface in the treatment tank proper 37.

Disposed near the bottom of the main treatment tank is a lower level detector 31 at a distance of X from the bottom. In this embodiment, the value of X is set at 40mm. Installed on the top of the treatment tank upper cylinder 38 upward of the lower level detector 31 is a lower level detector actuator 33. Then a power switch for the heater 22 which is turned ON-OFF by the action of the lower level detector actuator 33 is provided. Disposed slightly below the bottom end of the air blow-out duct 20 inside the main treatment tank is an upper level detector 32 distanced by Y from the tank bottom. In this embodiment, the value of Y is set at 300mm. Installed on the top of the treatment tank upper cylinder 38 and upward of the upper level detector 32 is an upper level detector actuator 34, and an alarm buzzer and an alarm lamp, not shown in this figure, which are turned ON-OFF by the action of the upper level detector actuator 34 are provided. Employed for these level detector and level detector actuator in this embodiment is a level sensor provided with an opening for sensing the pressure on the lower side and a sensor element on the upper side thereof. The blowers 4 and 15 etc. located at the top of the treatment tank upper cylinder 38 are enclosed with a cover 26 for their protection from wheathering.

With the apparatus of FIG. 5 provided with the lower level detector 31 and the upper level detector 32, upon the dirt level's going down to a lower level detector 31 due to vigorous action of aerobic bacteria and heavy evaporation of sewage by dint of the heater 22, the power supply for the heater 22 is switched off by the action of the lower level detector actuator 33. On the other hand, the moment the sewage level has gone up to the upper level detector 32 because of insufficient action of aerobic bacteria due to failure of any components installed inside the main treatment tank, the alarm buzzer and lamp are switched on by the action of the upper level detector actuator 34, warning occurrence of a failure in the main treatment tank.

The main treatment tank 30 of another embodiment shown in FIGS. 7 through 10 is composed of two bodies of a treatment tank proper 37 and a treatment tank upper cylinder 38, as differentiated from that of FIG. 1. In this tank, these two bodies are joined and secured by inserting and turning a joint male screw 44 tapped on the bottom end of a flange 45 of the treatment tank upper cylinder 38 into a joint female screw 43 tapped on the inner wall of a joint opening 39 at the center top of the treatment tank proper 37, and then tightening the screws until the flange 45 comes to touch on the top end of the joint opening 39 of the treatment tank proper 37. In its side wall, the treatment tank proper 37 is provided with a coupling pipe inlet 41 for attaching the coupling pipe 11 extending from the pretreatment tank, and at its upper shoulder, a vent duct fitting opening 42. Besides, protruded braces 40 for reinforcing the tank are provided on the wall of the treatment tank proper 37 in appropriate positions, as shown in the figures. Other protruded braces are also wound around the outer periphery of the treatment tank upper cylinder 38.

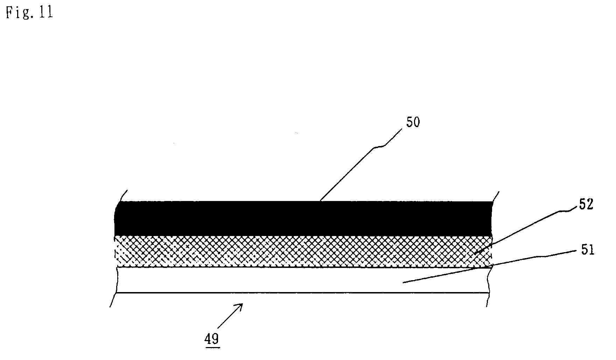

In this embodiment, the treatment tank proper 37 has 1100mm width, 610mm depth and 705mm height respectively between its inner walls, and 500mm ⌀ joint opening 39. The treatment tank upper cylinder 38 has 600mm height, as measured from the flange bottom. The protruded brace has a semi-circular section of 50mm width and 25mm height. As shown in FIG. 11, the tank wall is formed of a composite laminate made of hard synthetic resin materials. In this embodiment, hard urethane resin is used. The tank wall is composed of a core of a white hard urethane resin porous foam 52 sandwitched by a black hard urethane resin plate 50 on the outer wall side and a white hard urethane resin plate 51 on the inner wall side. The black color of the outer wall material of the tank wall renders facility for the main treatment tank to absorb the heat well from its circumference, lending itself to holding adequate temperature inside the tank, and the core of the hard urethane resin porous foam 52 provides high thermal insulation, detaining heat from escaping.

### EFFECTS OF THE INVENTION

As described in the foregoing, in the 2 tank excreta deordorization method and the apparatuses therefor, the dirt which has been pretreated into sewage by the decomposing action of aerobic bacteria in the pretreatment tank overflows through the side wall of the pretreatment tank, while keeping its level constant, then flowing into the next stage main treatment tank. Since it is held at a constant level in the pretreatment tank, adequate pretreatment period is ensured, so that the decomposition activity of aerobic bacteria is steadied, thus always making for the survival of more than a certain amount of aerobic bacteria, thereby optimizing the decomposition activity of the aerobic bacteria in the next stage main treatment tank. Accordingly, the excretal dirt is decomposed by this two stage treatment, generating carbon dioxide, and turned into sewage, which is further decomposed into steam. The carbon dioxide and steam are discharged through the vent duct for its complete disposal. For this reason, no dirt will be retained in the main treatment tank, nor any rise in its level will take place, obviating the need for its dipping-up. Nor any sludge will be produced, thus enabling dispensation with sewer. Besides, the stinking ammonia is decomposed into nitrogen and hydrogen by the agitating action of air and the activity of bacteria, to be discharged through the vent duct, thereby completely getting rid of malodor. Further the bacteria is annihilated by the large amount of carbon dioxide released in the vent duct; no bacteria is therefore discharged for the benefit of hygiene. Furthermore, the operation of the treatment tanks is run, while always monitoring the inside thereof by use of sensors including a temperature detector, lower and upper level detectors, for assurance of safe and efficient operation. As described hereinabove, this invention provides excellent actions and effects that have nevr been supposed to be atainable with prior-art excreta treatment methods and tanks.

## Claims

1. A 2 tank excreta deodorization treatment method which comprises accumulating dirt including excreta and flushing water in a pretreatment tank, predecomposing the dirt not only by stirring it by blowing out air into the accumulated dirt, but by giving oxygen to aerobic bacteria in the dirt, letting the predecomposed dirt overflow through a side wall of the pretreatment tank, thereby transferring it into a main treatment tank, not only stirring the transferred dirt by blowing out air into the dirt, while heating it to the activation temperatare of the aerobic bacteria, but blowing out air against the dirt surface, thereby giving oxygen to the aerobic bacteria in the dirt, to decomose and liquify it as well as converting it into carbon dioxide, hydrogen and nitrogen gases, and then discharging the carbon dioxide, hydrogen and nitrogen gases, together with steam.

2. The 2 tank excreta deodorization method, as claimed in Claim 1, wherein dirt level fall is precluded by suspending the heating of dirt upon detection of any fall of dirt level from a position slightly higher than the agitation air blow-out level in the accumulated dirt inside the main treat ment tank.

3. The 2 tank excreta deodorization method, as claimed either in Claim 1 or 2, wherein dirt level rise is precluded by issuing alarms upon detection of any dirt level rise from a position slightly lower than the level at which air is blown out against the dirt surface inside the main treatment tank.

4. A 2 tank excreta deodorization apparatus composed of
a) an excreta pretreatment tank having an inlet for letting in dirt including excreta and flushing water provided in the tank wall, an air feed piping arranged from a blower located outside the tank, a plurality of tubular legs linked to said air feed piping through flexible pipes and each provided with blow-out holes in the dirt placed inside the tank, a vent duct for discharging carbon dioxide, hydrogen and nitrogen gases which have generated from the dirt projected from the tank wall, and an outlet for letting the pretreated dirt flow out provided in a tank wall, and
b) an excreta treatment main tank having a dirt inlet communicated through a coupling pipe to the dirt outlet of the pretreatment tank provided in the tank wall, an air feed piping arranged from a blower located outside the tank, a plurality of tubular legs linked to said air feed piping through flexible pipes, each leg provided with air blow-out holes in the dirt, placed inside the tank, an air blow-out duct for blowing out air against the dirt surface in the tank hung there in, a heater for heating the dirt placed at the tank bottom, a thermostat provided with a temperature detector disposed in proximity to and directly upward of said heater at a distance therefrom installed outside the tank, and vent duct for discharging carbon dioxi de, hydrogen and nitrogen gases, together with steam, which have generated from the dirt, stood erect on the tank.

5. The 2 tank excreta deodorization apparatus, as claimed in Claim 4, wherein the lower level detector for dirt level detection is arranged at a position slightly higher than the air blow-out holes of the tubular legs linked to the air feed piping which are placed in the dirt inside the main treatment tank, and a switch for disconnecting power supply from the heater upon acknowledging the operation of the actuator for said lower level detector.

6. The 2 tank deodorization apparatus, as claimed in Claim 4 or 5, wherein the upper level detector for detecting the dirt level is arranged at a position slightly lower than the air blow-out duct for blowing out air against the dirt surface indide the main treatment tank, and an alarm buzzer and an alarm lamp which acknowledge the operation of the actuator for said upper level detctor.

7. The 2 tank excreta deodorization apparatus, as claimed in Claim 4, 5 or 6, wherein the tubular legs, each of which has air blow-out holes immersed in the dirt inside the main treatment tank, are replaced by a vertical air feed pipe and a U shape air blow-out pipe having a plurality of air blow-out holes on the lower side thereof.

8. The 2 tank excreta deodorization apparatus, as claimed in Claim 4, 5, 6 or 7, wherein the main treatment tank is composed of 2 bodies of a treatment tank proper having joint opening at the top center thereof and a treatment tank upper cylinder mated to the joint opening at the top center of said treatment tank proper, the treatment tank proper having a dirt inlet, to which is connected the coupling pipe extending from the pretreatment tank, provided in the side wall and a fitting hole for vent duct through which to discharge carbon dioxide, hydrogen and nitrogen gases, together with steam, at the upper wall shoulder thereof.

9. The 2 tank excreta treatment apparatus, claimed in Clai m 4, 5, 6, 7 or 8, wherein the wall of the main treatment tank is formed of a hard resin laminate of a hard resin porous foam as its core sandwitched by hard resin plates on both sides thereof.

10. The 2 tank excreta treatment apparatus, claimed in Claim 4, 5, 6, 7, 8 or 9, wherein the material of the main treatment tank wall is a hard urethane resin.

11. The 2 tank excreta treatment apparatus, claimed in Claim 4, 5, 6, 7, 8, 9 or 10, wherein the outer wall of the main treatment tank is colored black, while its inner wall is white in color.
